# EUROPEAN PATENT APPLICATION

(11) **EP 3 542 623 A1**
(43) Date of publication of application: **25.09.2019**
(21) Application number: 18163368.6
(22) Date of filing: 22.03.2018
(51) Int. Cl.: A01K 27/00, A01K 15/02

(54) **VERSATILE PULL AND PINCH ANIMAL COLLAR**

(71) Applicant: Bellon, Michael, 2660 Hoboken (BE); Bellon, Bart, 2660 Hoboken (BE)
(72) Inventor: BELLON, Michael, 2660 Hoboken (BE); BELLON, Bart, 2660 Hoboken (BE)
(74) Representative: Pronovem

(57) **Abstract**

The present invention is related to an animal collar comprising a first element or neck part (1) which is a length of material with a ring or an eye (15) at each end and a second element or pull part (2) under the form of a closed loop made of a chain of links (21) and having two rings (22, 23) and two snap hooks (24) linked in the chain of links (21), so that the snap hooks (24) alternate with the rings (22, 23) on the chain, wherein the neck part (1) is made of individual and distinct separate modules (10, 11, 12) attached to one another only thanks to at least two substantially flexible parallel tubes or cords (13, 14), each module (10, 11, 12) being provided on its face directed to the animal's neck by one or more recesses which can be occupied by removable parts selected from the group of screws with flat head (16) and spikes (17).

## Description

### Field of the Invention

The present invention relates to a multifunctional animal collar specially designed to fit in the so-called Chameleon® philosophy, i.e. adapting to the different environment requirements (regulatorily or "politically", legally, visually, etc.).

### Prior Art

A dog training collar is a piece of material such as fabric, nylon or metal chain put around the neck of a dog, generally intended to teach obedience, control nuisance behavior or to define boundaries.

Several types of (training) dog collars are known.

Among regular training collars, flat collars are basic standard collars with a buckle or quick release (plastic snap) closure and with a ring for attaching a leash and/or an identification tag.

Martingale collars are circumference limited-slip collars specially designed for dogs with narrow heads such as sighthounds. They have a first length of material with a metal ring or eye at each end. A second loop of material passes through the two rings and the leash attaches to a ring on this loop. When the dog tries to back out of the collar, the latter tightens around its neck without choking.

Beside flat collars, some trainers use collars that enable more negative reinforcement and corrective possibilities in the training of the dog. Choke chains (or slip chains) are made of a chain of metal links to control the dog by tightening around its neck. The length of chain has rings at either end so that the collar can be formed into a loop that slips over the dog's neck. When the leash is attached to the "dead" ring the collar does not constrict on the dog's neck. When the leash is attached to the "live" ring, the chain slips and adjusts tighter when pulled and slips looser when tension is released. In this case and contrary to martingale collars, there is impossible to control how much the choke chain tightens and strangling or injuring the dog may not be excluded with misuse thereof.

Pinch or prong collars are similar in style to the martingale. The control loop to which the leash is attached is made of a chain and the loop fitting around the dog's neck is made of a series of metal links having prongs or fangs usually provided with blunted tips. When the control loop is pulled, the prongs pinch the loose skin of the dog's. Unlike the choke chains, prong collars have a limit on how far they can constrict on a dog's neck. The leash attaches to the looped chain generally at a swivel point. The limited traction of the martingale chain together with the angle of the prongs prevent the prongs moving close enough to pinch. The collar is designed to prevent the dog from pulling by applying pressure at several points against the dog's neck. An example of such a collar is provided in US 6,938,580 B2.

Further there are electronic training collars (also known as e-collars, remote training collars, electric collars, etc.) developed to deliver low intensity electric signal, vibrations, tones, light, etc. to the dog via the collar. Among these is the Chameleon® II electronic collar (see patent application WO 2017/001279 A1).

Finally fur saver collars are known as slip chains that contain fewer and longer individual links than a close link chain to be used both for long and short haired breeds limiting damage to the dog's fur.

Document US 9,603,340 B2 discloses a dog training collar providing training with negative reinforcement possibilities without requiring the use of a conventional pinch collar structure. The dog training collar has a series of spikes mounted on the inner side of the collar diametrically opposite the position of the buckle of the collar when mounted on a canine. The spikes are formed as truncated cones of plastic that have a rounded apex so as not to injure the canine during utilization. The spikes can be formed as pairs mounted on a base that is positioned on the interior of the collar with the spikes projecting through openings on the inner side of the collar. The rounded apex on the cones allows the collar to be worn comfortably until the leash is pulled to engage the spikes into the neck of the canine being trained. The exterior of the collar has the look of a standard flat buckle dog collar.

### Aims of the Invention

The instant invention aims to provide a solution to the requirements of versatility of presently marketed dog training collars. Where it is allowed and when needed, such a collar has to be transformed for example into a half choke or a pinch collar (by attaching the leash to the single ring or double ring, respectively).

When used as a pinch collar, the collar has to be customized to how many and what type of contact points are used. The very idea of the invention is to provide a collar having a part where contact points can be put in or taken out. The closure possibilities are endless and well-known of the skilled person.

Also, one goal of the invention is to possibly use this device as a dummy collar for people who are getting their dogs ready to train with an electronic collar.

Furthermore this collar has to adapt to the local regulatory or legal environment the user is in. For example, in a country where pinch collars are illegal, all the contact points should be taken out and the collar simply used as a pull collar.

Finally, the collar ought to be used as a normal "pull collar", when it is wanted a dog to pull, in exercise for example, as well as a day to day collar to snap a leash on when needed and with a suitable design to reduce matting down the hair/fur of the dog.

### Summary of the Invention

A first aspect of the present invention relates to an animal collar comprising a first element or neck part which is a length of material with a ring or an eye at each end and a second element or pull part under the form of a closed loop made of a chain of links and having two rings and two snap hooks linked in the chain of links, so that the snap hooks alternate with the rings on the chain, wherein the neck part is made of individual and distinct separate modules attached to one another only thanks to at least two substantially flexible parallel tubes or cords, each module being provided on its face directed to the animal's neck by one or more recesses which can be occupied either by removable parts selected from the group of screws with flat head and spikes.

According to preferred embodiments, the animal collar of the invention is further limited by one of the following features or by a suitable combination thereof:
- the neck part comprises one central module, with respect to the length of the material, and at least one or two lateral modules located on each side of the central module ;
- the spikes have a blunt tip or a short or long sharp tip;
- the screws with flat head are plastic, metal or rubber screws;
- the number of recesses/screws or recesses/spikes by module is comprised between 1 and 3 ;
- the number and the location of spikes on the modules are adjusted so as to modulate the overall pressure sensation of the collar on the animal's neck or to modify the balance of the pressure sensation around the animal's neck ;
- the second element or pull part is absent and the collar made only of the first element or neck part closed by a quick closure system.

A further aspect of the invention concerns the use of the collar as above in the configuration of a pull collar, wherein the snap hooks of the pull part are attached into the both rings of the neck part and a leash is attached to both rings of the pull part maintained together, with only flat screws located on the inside of the neck part.

Still a further aspect of the invention concerns the use of the collar as above in the configuration of a half-choke collar, wherein each snap hook of the pull part is attached to one of the two rings of the neck part, with one ring of the pull part located between the two snap hooks and wherein a leash is attached to the second ring of the pull part, with only flat screws located on the inside of the neck part.

Still a further aspect of the invention concerns the use of the collar as above in the configuration of a pinch collar, wherein contact points or spikes are located on the inside of the neck part, so that the more contact points that replace the flat screws, the less the animal will feel the pressure sensation.

In one embodiment, a leash hook is attached to a single ring of the pull part and with the contact points located on the lateral side modules, for providing more pressure sensation on either extremity of the collar.

In a second embodiment, a leash hook is attached to both rings of the pull part maintained together with a contact point on the central module, for providing more pressure sensation on the center of the collar.

### Brief Description of the Drawings

FIG. 1 represents an embodiment of the two-element collar of the present invention.
FIG. 2 represents the collar of FIG. 1 where the two elements are attached together.
FIG. 3 represents firstly the collar of the invention used as a pull collar (A) or a half-choke collar (B) and secondly the collar of the invention used as a half-choke set up for pinch collar (C) or as a pinch collar with dead ring (D).

### Description of Preferred Embodiments of the Invention

This multifunctional collar of the present invention is specially designed to fit in the Chameleon® philosophy: adapt to the environment (regulatorily or "politically", legally, and visually.) This collar can however be the everyday collar that the dog wears and is suitable to snap a leash on when needed. Thus the collar could also have some accessories, for example to transform it in a buckle collar.

The collar of the present invention can be used either as a half choke or as a pull collar (by affixing the lead to one ring or two rings, respectively.). Where it is allowed and when needed, the collar can be transformed into a half-choke or dead ring pinch collar (by attaching the leash to the single ring or double ring, respectively). When used as a pinch collar, the collar can be customized to how many, where, and what type of contact points are used. Also, this device can be used as a dummy collar for users who are getting their dogs ready to train with the Chameleon® II electronic collar. This collar can adapt to the local regulatory/legal environment. For example, in a country where pinch collars are illegal, all the contact points can be taken out and the collar used as only a pull collar. The collar can also be used as a day to day collar to snap a leash on when needed.

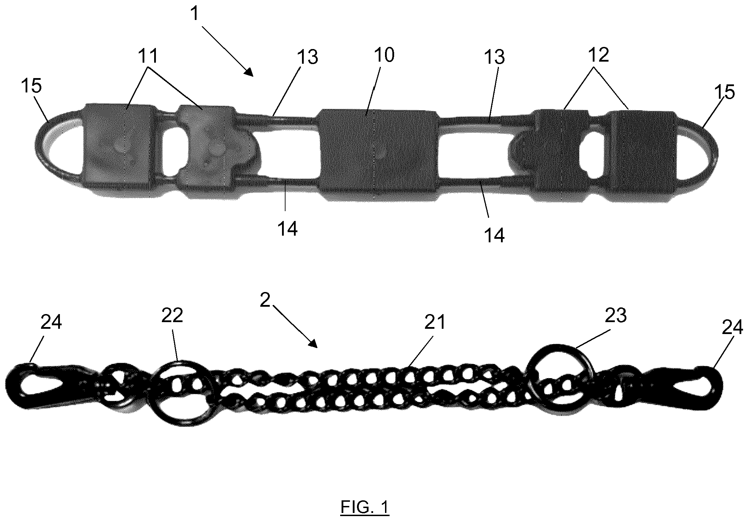

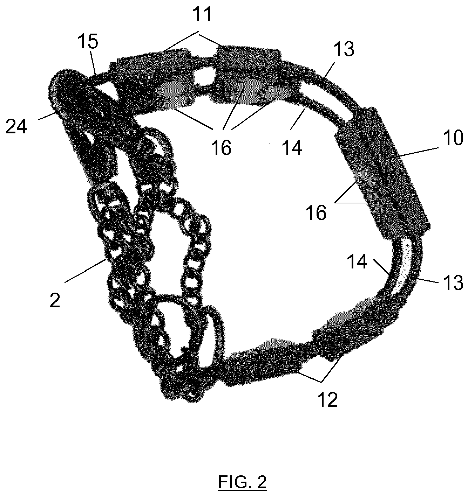

According to one embodiment shown on FIG. 1 and FIG. 2, the collar of the present invention has a first element or neck part 1 which is a length or strip of material with a ring or an eye 15 at each end and a second element or pull part 2 under the form of a closed loop made of a chain of links 21 and having two rings 22, 23 and two snap hooks 24 linked inside the chain of links 21. The snap hooks 24 alternate with the rings 22, 23 on the chain.

According to one embodiment, the first element 1 is made of individual and distinct separate modules (or "islands") 10, 11, 12 attached to one another only thanks to at least two substantially flexible parallel tubes or cords 13, 14. Each module 10, 11, 12 is provided by one or more recesses on the face directed to the dog's neck and which can be occupied either by removable screws with flat head 16 or by removable contact points or spikes 17. The tips of the contact points can be blunt, sharp, short or long. The contacts can be as many or as few as desired and their possible location is plentiful.

The removable screws 16 can advantageously be plastic screws. They can also be made of metal or rubber. They can be made of any material provided they are smooth and comfortable to the dog.

According to one embodiment for a short version of the collar, the first element 1 comprises one central module 10 (i.e. located centrally in the length of the material) and at least one or two lateral modules 11, 12 located on each side of the central module 10.

The collar depicted in FIG. 1 and FIG. 2 is thus a small size collar. Larger size collars have more islands in which contact points may or may not be placed.

According to one alternate embodiment of the invention, only the first element 1 made of individual and distinct separate modules (or "islands") is present and the collar is a day to day collar provided for example with a quick release closure (such as a Velcro® closure) instead of rings and eyes as above.

According to the invention, the special modular design with modules or "islands" separated by "voids" greatly has the advantage of reducing matting down the hair/fur of the dog. Indeed, due to the special design of this collar that provides space between the "islands", this collar will not make pressure marks on the dog's fur like for example standard flat collars normally do.

Still according to the invention, the collar can be a remote controlled electronic collar, where the electronic receiver and contact parts are lodged within the modules 10, 11, 12 and connected by wires located within the connecting flexible tubes 13, 14. The recesses can then be used for placing the electric contact points/pins instead of the plastic screws 16 (see Chameleon® II electronic collar or patent application WO 2017/001279 A1).

Thanks to the design with removable electric contact points, the collar according to the invention can also be used as a dummy collar or fake electronic collar to prepare/desensitize the dog to the real electronic collar (in this case, the Chameleon® II collar).

The collar of the invention has also the advantage to be lightweight: it can for example have a weight of about 100 g to withstand at least 130 kg linear tension. Testing at the factory shows that the collar of the invention can withstand at least 300 kg of pressure when around the neck of a dog.

The versatile collar of the present invention is capable to be advantageously used in a number of configurations known from prior art (see above).

### Use as a pull collar:

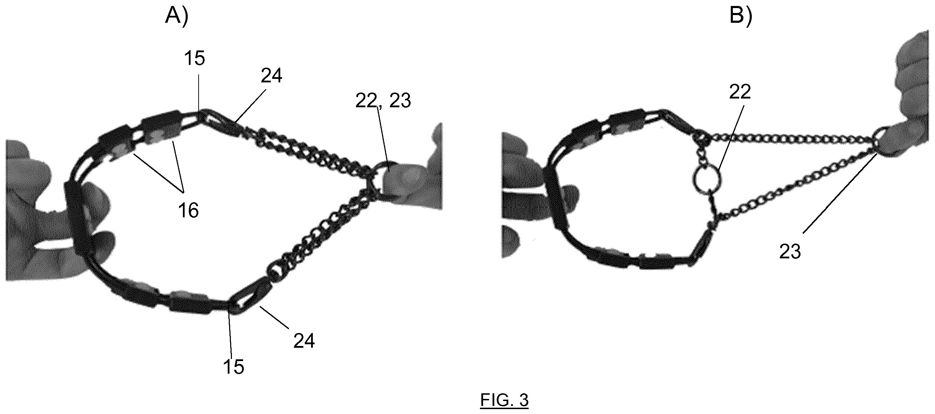

Used in the configuration of a pull collar, as shown on FIG. 3A, the snap hooks 24 of the loop 2 are attached into the both rings 15 of the neck part 1 and the leash (not shown) is attached to both rings 22, 23 maintained together. There are no contact points on the inside of neck part 1, only flat plastic screws 16.

In the half-choke collar use of FIG. 3B, each snap hook 24 is attached to one of the two rings 15 of element 1, with one ring 22 of the loop 2 located between the two snap hooks 24 and the leash (not shown) is attached to the second ring 23 of the loop 2. There are no contact points on the inside of element 1, only flat plastic screws 16.

### Use as a pinch collar:

In this embodiment, plastic contact points or spikes 17 delivered with the collar must be tightened by hand as a replacement for one or more of the original plastic screws 16. The more contact points 17 that replace the flat screws 16, the less the dog will feel the pressure sensation. There are preferably two ways to attach the leash to the pinch collar:

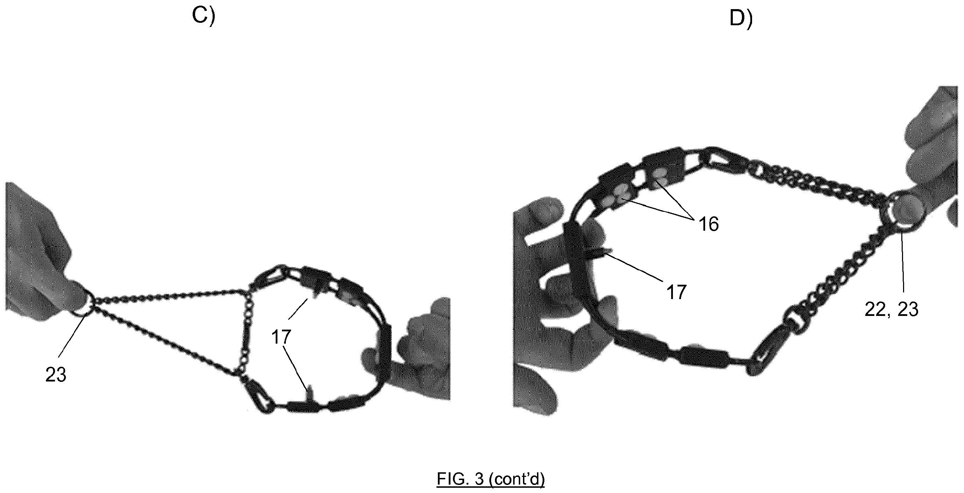

1. in FIG. 3C, the leash hook attached to a single ring 23 of the loop 2 together with contact points 17 located on the lateral side modules 11, 12 will provide more pressure sensation on either extremity of the collar ;
2. in FIG. 3D, the leash hook attached to both rings 22, 23 of element 1 maintained together and with a contact point 17 on the central module 10 will provide more pressure sensation on the center of the collar.

### Reference symbols

- 1: First collar element (neck part)
- 2: Second collar element (loop)
- 10: Central module
- 11: Lateral module
- 12: Lateral module
- 13: Linking tube
- 14: Linking tube
- 15: End ring or eye
- 16: Screw with flat head
- 17: Spike with blunt tip
- 21: Link chain
- 22: Ring
- 23: Ring
- 24: Snap hook

## Claims

1. An animal collar comprising a first element or neck part (1) which is a length of material with a ring or an eye (15) at each end and a second element or pull part (2) under the form of a closed loop made of a chain of links (21) and having two rings (22, 23) and two snap hooks (24) linked in the chain of links (21), so that the snap hooks (24) alternate with the rings (22, 23) on the chain, wherein the neck part (1) is made of individual and distinct separate modules (10, 11, 12) attached to one another only thanks to at least two substantially flexible parallel tubes or cords (13, 14), each module (10, 11, 12) being provided on its face directed to the animal's neck by one or more recesses which can be occupied by removable parts selected from the group of screws with flat head (16) and spikes (17).

2. The animal collar of claim 1, wherein the neck part (1) comprises one central module 10, with respect to the length of the material, and at least one or two lateral modules (11, 12) located on each side of the central module (10).

3. The animal collar of claim 1, wherein the spikes (17) have a blunt tip or a short or long sharp tip.

4. The animal collar of claim 1, wherein the screws with flat head (16) are plastic, metal or rubber screws.

5. The animal collar of claim 1, wherein the number of recesses/screws or recesses/spikes by module (10, 11, 12) is comprised between 1 and 3.

6. The animal collar of claim 1, wherein the number and the location of spikes (17) on the modules (10, 11, 12) are adjusted so as to modulate the overall pressure sensation of the collar on the animal's neck or to modify the balance of the pressure sensation around the animal's neck.

7. The animal collar of claim 1, wherein the second element or pull part (2) is absent and the collar made only of the first element or neck part (1) closed by a quick release closure system.

8. Use of the collar according to anyone of claims 1 to 6 in the configuration of a pull collar, wherein the snap hooks (24) of the pull part (2) are attached into the both rings (15) of the neck part (1) and a leash is attached to both rings (22, 23) of the pull part (2) maintained together, with only flat screws (16) located on the inside of the neck part (1).

9. Use of the collar according to anyone of claims 1 to 6 in the configuration of a half-choke collar, wherein each snap hook (24) of the pull part (2) is attached to one of the two rings (15) of the neck part (1), with one ring (22) of the pull part (2) located between the two snap hooks (24) and wherein a leash is attached to the second ring (23) of the pull part (2), with only flat screws (16) located on the inside of the neck part (1).

10. Use of the collar according to anyone of claims 1 to 6 in the configuration of a pinch collar, wherein contact points or spikes (17) are located on the inside of the neck part (1), so that the more contact points (17) that replace the flat screws (16), the less the animal will feel the pressure sensation.

11. Use of the collar according to claim 10, wherein a leash hook is attached to a single ring (23) of the pull part (2) and with the contact points (17) located on the lateral side modules (11, 12), for providing more pressure sensation on either extremity of the collar.

12. Use of the collar according to claim 10, wherein a leash hook is attached to both rings (22, 23) of pull part (2) maintained together with a contact point (17) on the central module (10), for providing more pressure sensation on the center of the collar.
